# EUROPÄISCHE PATENTSCHRIFT

(11) **EP 3 440 723 B1**
(45) Veröffentlichungstag und Bekanntmachung des Hinweises auf die Patenterteilung: **08.09.2021**
(21) Anmeldenummer: 17715090.1
(22) Anmeldetag: 29.03.2017
(51) Int. Cl.: H01M 10/46, H01M 50/213, H02J 7/00, B25F 5/00

(54) **HANDWERKZEUGMASCHINE**
HANDHELD POWER TOOL
MACHINE-OUTIL À MAIN

(30) Priorität: 05.04.2016 DE 102016205568
(43) Veröffentlichungstag der Anmeldung: 13.02.2019
(73) Patentinhaber: Robert Bosch GmbH, 70442 Stuttgart (DE)
(72) Erfinder: DIETEL, Juergen, 70597 Stuttgart (DE)
(86) Internationale Anmeldenummer: PCT/EP2017/057430
(87) Internationale Veröffentlichungsnummer: WO 2017/174419

(56) Entgegenhaltungen:
- EP-A1- 2 944 432
- EP-A1- 2 944 432
- EP-A1- 2 996 174
- WO-A1-2009/033865
- DE-A1-102007 042 398
- DE-A1-102015 201 574
- DE-A1-102015 201 574
- US-A- 5 227 262
- US-A- 5 227 262
- US-A1- 2011 198 103
- US-A1- 2011 198 103
- US-B1- 6 729 415
- US-B1- 6 729 415

## Beschreibung

Die vorliegende Erfindung betrifft eine Handwerkzeugmaschine nach Anspruch 1.

Elektrische Handwerkzeugmaschinen sind grundsätzlich bekannt und werden über einen Netzanschluss mit Strom versorgt. Alternativ ermöglichen Akkugeräte eine hohe Flexibilität beim Arbeiten, da sie insbesondere unabhängig von Netzstrom sind. Auf diese Weise können beispielsweise auch Außenarbeiten bequem durchgeführt werden, so dass bei einem Betrieb einer Handwerkzeugmaschine vielfach vorgesehen ist, Akkupacks einzusetzen.

Derartige Akkupacks sind grundsätzlich bekannt und weisen in der Regel eine Mehrzahl von in Parallel- und/oder Reihenschaltung verbundener wiederaufladbare Akkumulatoren, beispielsweise drei in Reihe geschaltete, zylinderförmige Lilonen-Zellen mit z.B. je 3,6 V mit einer Gesamtspannung von 10,8 V, auf. Die verbundenen Akkuzellen müssen zum einen mit einer Akkupackelektronik und zum anderen untereinander verbunden werden. Das Akkupack umfasst in der Regel ein Akkupackgehäuse in denen die Akkuzellen vorzugsweise mittels eines Zellhalters entweder vollständig oder teilweise aufgenommen sind. Alternativ bildet der Zellhalter selber ein Akkupackgehäuseelement des Akkupackgehäuses aus.

Im Rahmen dieser Anmeldung ist unter einem Akkupack somit ein vorzugsweise aus mehreren elektrisch zusammengeschalteten Akkuzellen bestehendes Akkumulatorenpaket zu verstehen, das elektrische Energie speichern kann, die für den Betrieb einer Handwerkzeugmaschine benötigte Energie liefert, und austauschbar in einer Kammer, einer Schnittstelle oder dergleichen der Handwerkzeugmaschine anbringbar ist. Insbesondere soll unter einer Schnittstelle eine Vorrichtung verstanden werden, die dazu vorgesehen ist, eine elektrische und insbesondere eine mechanische Verbindung mit einem Ladegerät und/oder einer Entladeseite, also der Handwerkzeugmaschine direkt oder indirekt herzustellen.

Das Ankoppeln des Akkupacks an die Handwerkzeugmaschine erfolgt durch Einstecken beziehungsweise Einschieben der Schnittstelle des Akkupacks in eine komplementäre Einsteckbuchse des Gerätegehäuses. Die Schnittstelle weist Kontaktschlitze auf, in denen Kontaktelemente angeordnet werden können. Ist die Energie des Akkupacks verbraucht, so kann er entnommen und mit einer Ladestation mit entsprechenden Gegenkontaktelementen verbunden werden. Stehen mehrere Akkupacks zur Verfügung, so ist es möglich, das entladene Akkupack aus der Handwerkzeugmaschine zu entnehmen und gegen ein geladenes auszutauschen. Dabei bestimmen in der Regel die Nennspannung und Kapazität des jeweils verwendeten Akkupacks die Leistung und Laufzeit der Handwerkzeugmaschinen.

Aus dem Stand der Technik ist einerseits bekannt, dass sich Akkupacks mit Hilfe einer Kodierung gegenüber dem Ladegerät und der Handwerkzeugmaschine, identifizieren können, so dass andere, nicht für die Handwerkzeugmaschine vorgesehene Akkupacks, z. B. solche mit einer anderen Nennspannung, seitens der Handwerkzeugmaschine nicht akzeptiert werden, damit der Akkupack und/oder die Handwerkzeugmaschine keinen Schaden nehmen.

Ferner ist bekannt, dass verschiedene Handwerkzeugmaschinen einer Spannungsklasse untereinander nicht kompatible Akkupacks aufweisen, wohingegen die Akkupacks von verschiedenen Handwerkzeugmaschinen innerhalb einer Volt-Klasse, beispielweise einem Stabschrauber, einem Akku-Bohrer, einer Schlagbohrmaschinen, einer Stichsägen, einem Multifunktionswerkzeug und/oder einem Bohrschrauber, oftmals kompatibel sind. DE102015201574 offenbart eine Handwerkzeugmaschinenakkuvorrichtung mit einem Gehäuse und einer mechanischen und elektrischen Schnittstelleneinheit zu einer lösbaren Kopplung mit einer Handwerkzeugmaschine. DE102007042498 offenbart ein Ladegerät für mindestens einen aufladbaren Akkupack mit einem Gehäuse, welches Mittel zur Aufnahme mindestens eines Akkupacks und mindestens zwei Kontaktelemente zur Spannungsversorgung des Akkupacks umfasst. EP2944432 offenbart ein Elektrowerkzeug mit Motor und einem ersten und zweiten Akkupack. Ein erstes Schaltelement ist zwischen dem ersten Akkupack und dem Motor eingekoppelt. Ein zweites Schaltelement ist zwischen dem zweiten Akkupack und dem Motor gekoppelt. Mit dem ersten Schaltelement und dem zweiten Schaltelement ist eine Steuerung gekoppelt. US2011198103 offenbart ein Elektrowerkzeug, das durch eine Mehrzahl von in Reihe geschalteten Batteriepacks betrieben wird. Ein Controller des Elektrowerkzeugs ist so konfiguriert, dass er Signale empfängt, die von den integrierten Schaltkreisen, die sich in jedem der Batteriepacks befinden, ausgegeben werden. Ein erster Spannungspegelschieber ist zwischen der Steuerung des Elektrowerkzeugs und einer der integrierten Schaltungen der Batteriepacks angeordnet und so konfiguriert, dass er den Spannungspegel des Signals, das von der jeweiligen integrierten Schaltung an die Werkzeugsteuerung ausgegeben wird, auf einen für die Steuerung akzeptablen Pegel verschiebt. EP2996174 offenbart ein Akkupack für eine Handwerkzeugmaschine mit wenigstens eine Schnittstelle zum Herstellen einer mechanischen und/oder elektrischen Verbindung des Akkupacks mit einer Handwerkzeugmaschine und/ oder einem Ladegerät, wobei die Schnittstelle Führungsmittel zum Ansetzen des Akkupacks an die Handwerkzeugmaschine und/oder das Ladegerät entlang einer Kontaktierungsrichtung y aufweist, sowie zumindest vier Kontaktelemente zur elektrischen Kontaktierung korrespondierender Gegenkontaktelemente an der Handwerkzeugmaschine und/oder korrespondierender Gegenkontaktelemente an dem Ladegerät. Dabei sind mindestens zwei Kontaktelemente in Richtung der Kontaktierungsrichtung y versetzt zueinander angeordnet.

Sowohl die Akkupacks als auch die Handwerkzeugmaschinen und Ladegeräte und damit die jeweiligen Schnittstellen unterliegen einer steten Weiterentwicklung, wobei es üblich ist, dass zusätzliche Kontaktelemente und Gegenkontaktelemente in den Schnittstellen implementiert werden sollen, um zusätzliche Informationen zwischen den Geräten auszutauschen. Dabei ist es erstrebenswert, aus Gründen der Handlichkeit und Handhabbarkeit sowohl des Akkupacks als auch der Handwerkzeugmaschine, den für die Schnittstelle benötigten Bauraum so kompakt wie möglich zu halten. Darüber hinaus ergibt sich aus Gründen der Kompatibilität zu Vorgängermodellen gegebenenfalls die Forderung, die Geometrie der Schnittstelle gegenüber einem Vorgängermodell so wenig wie möglich zu ändern.

Grundsätzlich erweist es sich als nachteilig, dass die von den Herstellern angebotenen Handwerkzeugmaschinen üblicherweise mit jeweils unterschiedlichen Akkupacks angeboten werden, wobei die Akkupacks verschiedene Baugrößen und/ oder Nennspannungen aufweisen und jedes Akkupack bezüglich der Leistung und der Geometrie der Rast- und Kontaktelemente einem bestimmten Typ von Handwerkzeugmaschine zugeordnet ist. Die Verwendbarkeit eines solchen Akkupacks ist relativ unflexibel, weil sich der Einsatz eines jeden Akkupacks auf einen ganz bestimmten Typ einer Handwerkzeugmaschine beschränkt

### Offenbarung der Erfindung

Aufgabe der Erfindung ist es, die oben genannten Nachteile zu verbessern und eine verbesserte Handwerkzeugmaschine umfassend ein lösbar mit der Handwerkzeugmaschine verbindbares Akkupack der eingangs genannten Art bereitzustellen, das bei einer Vielzahl von verschiedenen Handwerkzeugmaschinen einsetzbar ist.

Diese Aufgabe wird durch eine Handwerkzeugmaschine mit Akkupack gemäß Anspruch 1 gelöst. Vorteilhafte Ausgestaltungen, Varianten und Weiterbildungen der Erfindung sind den Unteransprüchen zu entnehmen.

Erfindungsgemäß ist vorgesehen, dass eine Handwerkzeugmaschine mit Akkupack ein Akkupackgehäuse aufweist, wobei das Akkupackgehäuse mindestens zwei Akkuzellen aufnimmt. Das Akkupack ist über eine Schnittstelle mit einer Handwerkzeugmaschine und einem Ladegerät mechanisch und elektrisch verbindbar, wobei die Schnittstelle Kontaktelemente zur elektrischen und/oder mechanischen Kontaktierung korrespondierender Gegenkontaktelemente an der Handwerkzeugmaschine und/oder korrespondierender Gegenkontaktelemente an dem Ladegerät aufweist. Erfindungsgemäß ist vorgesehen, dass das Akkupackgehäuse wenigstens einen ersten Akkuzellenstrang zur Aufnahme wenigstens einer ersten Akkuzelle und wenigstens einen zweiten Akkuzellenstrang zur Aufnahme wenigstens einer zweiten Akkuzelle umfasst, wobei das Akkupackgehäuse für jeden Akkuzellenstrang wenigstens zwei elektrische Kontaktelemente aufweist. Der Vorteil der Erfindung liegt unter anderem darin, dass die erfindungsgemässe Handwerkzeugsmaschine ein Akkupack umfasst, das keine festgelegte Spannungsklasse mehr aufweist, sondern durch Reihen- und/oder Parallelschaltung von wenigsten zwei Akkuzellensträngen wenigstens zwei verschiedene Spannungsklassen, beispielsweise 18V und 36V bedienen kann. Der Bediener kann mittels eines vorhandenen 36V Akkupack auch eine 18V Handwerkzeugmaschine betreiben, wodurch er die Investition in einen 18V Akkupack und eines entsprechenden Ladegerät einsparen kann. Ferner wird
eine Bereitstellung eines Akkupacks zum Betrieb verschiedener Handwerkzeugmaschinen mit unterschiedlichen Betriebsspannungen, ermöglicht, so dass der Bediener die erfindungsgemässe Handwerkzeugmaschine mittels eines Akkupacks betreiben kann, obwohl eventuell das original Akkupack bzw. das ursprüngliche Akkupack defekt oder entladen ist. Dabei ist es von Vorteil, dass keine zwei verschiedenen Ladegeräte verwendet werden bzw. auf eine Baustelle mitgenommen werden müssen.

Der erste Akkuzellenstrang und der zweiten Akkuzellenstrang sind innerhalb des Akkupackgehäuses elektrisch voneinander isoliert angeordnet. In eine besonders bevorzugten Ausführungsform nimmt jeweils der erste Akkuzellenstrang und der zweiten Akkuzellenstrang mehrere in Reihenschaltung elektrisch leitend miteinander verbundene Akkuzellen, vorzugsweise fünf Ackuzellen, besonders bevorzugt zehn Akkuzellen auf. Dabei ist es von Vorteil, wenn der erste Akkuzellenstrang und der zweiten Akkuzellenstrang jeweils die gleiche Anzahl Akkuzellen aufnimmt.

Vorzugsweise sind der erste Akkuzellenstrang und der zweiten Akkuzellenstrang bei einem eingesetzten Akkupack derart in Parallel- oder in einer Reihenschaltung elektrisch leitend miteinander verbunden, dass die von der Handwerkzeugmaschine benötigte Spannung anliegt. Dabei ist die bereitzustellende Nennspannung ein Vielfaches der jeweiligen Spannung des ersten Akkuzellenstrangs und des zweiten Akkuzellenstrangs. Somit können beispielsweise erfindungsgemässe Handwerkzeugmaschinen, die für einen Betrieb mit einem etwas leistungsschwächeren Akkupack vorgesehen sind, nun alternativ mit einem leistungsstärkeren Akkupack betrieben werden, wodurch ein erfindungsgemäßes lösbar mit der Handwerkzeugmaschine verbindbares Akkupack eine Laufzeitverlängerung der Handwerkzeugmaschine erlaubt.

Die Anzahl der Kontaktelemente der Schnittstelle des Akkupacks entspricht der Anzahl der Gegenkontaktelemente der Schnittstelle der Handwerkzeugmaschine. Somit können Akkupacks über die Schnittstelle mechanisch und elektrisch mit verschiedenen Handwerkzeugmaschinen verbunden werden, obwohl diese sich in der jeweils benötigten Nennspannung, Kapazität und/ oder Betriebsspannung unterscheiden.

Ferner können auf diese Weise Akkupacks verwendet werden, die ursprünglich nicht zum Betrieb der Handwerkzeugmaschine vorgesehen waren, dessen Verwendung jedoch aufgrund der variablen Nennspannung und Kapazität einen Betrieb der Handwerkzeugmaschine bewirken können.

In einer bevorzugten Ausführungsform der Erfindung umfasst das Akkupackgehäuse wenigstens einen Zellenhalter zur Aufnahme des wenigstens einen ersten Akkuzellenstrangs und/oder des wenigstens einen zweiten Akkuzellenstranges, wobei vorteilhafterweise der Zellenhalter den wenigstens einen ersten Akkuzellenstrang und/oder den wenigsten einen zweiten Akkuzellenstrang unmittelbar ausbildet.

Grundsätzlich können innerhalb des Akkupacks verschiedene Ausführungsformen eines Zellenhalters verwendet werden, so dass Akkuzellen mit verschiedenen Durchmessern und Längen aufgenommen werden können und eine Anwendung des Zellenhalters in unterschiedlichen Akkupacks gewährleistet werden kann.

Als Akkuzellen für ein Akkupack können verschiedene Akkumulatorentypen mit unterschiedlichen Materialien, wie beispielsweise Lithium-Ionen (Li-Ion),Nickel-Cadmium (NiCd), Nickel-Metallhydrid (NiMH) oder Lithium-Polymer (LiPo), unterschiedlichen Bauformen, zum Beispiel runde, prismatische oder eckige, oder andere alternative Systeme, wie beispielsweise Brennstoffzellen, verwendet werden. Vorzugsweise werden insbesondere Lithiumionenzellen angewandt, da es insbesondere bei Lithiumionenzellen möglich ist, mehrere Akkuzellen zu Akkuzellenblöcken zusammenzufassen, in denen mehrere Akkuzellen in einer Parallel- und/oder Reihenschaltung verbunden sind. Dabei ist es besonders vorteilhaft, dass der Zellenhalter Akkuzellen mit verschiedenen Durchmessern und Längen aufnehmen kann, wodurch die Anwendung des Zellenhalters bzw. des Zellenträgers in unterschiedlichen Akkupacks erreicht werden kann.

Das Akkupack ist erfindungsgemäss in einem Werkzeugsystem vorgesehen. Dementsprechend bildet eine Handwerkzeugmaschine, die ein lösbar mit der Handwerkzeugmaschine verbindbares Akkupack umfasst, den Gegenstand der Erfindung, wobei die Handwerkzeugmaschine ein Gehäuse mit einem in dem Gehäuse angeordneten Antriebsmotor zum Antrieb einer mechanischen Schnittstelle und eine in dem Gehäuse angeordnete erste Elektronik aufweist. Ferner umfasst die Handwerkzeugmaschine ein lösbar mit der Handwerkzeugmaschine verbindbares Akkupack und eine Schnittstelle mit korrespondierenden Gegenkontaktelementen zur elektrischen und mechanischen Kontaktierung mit den Kontaktelementen der Schnittstelle des Akkupacks.

Die Schnittstelle weist wenigstens vier elektrische Gegenkontaktelemente auf, wobei die Gegenkontaktelemente derart miteinander verschaltet angeordnet sind, dass bei einem eingesetzten Akkupack der Antriebsmotor mit der benötigten Spannung versorgt wird. Die Anzahl der Gegenkontaktelemente der Schnittstelle der Handwerkzeugmaschine entspricht der Anzahl der Kontaktelemente der Schnittstelle des Akkupacks. In einer bevorzugten Ausführungsform entspricht die Betriebsspannung der Handwerkzeugmaschine ein Vielfaches der durch wenigstens einen Akkuzellenstrang bereitgestellten Spannung; und wobei die elektrischen Gegenkontaktelemente derart miteinander verbunden sind, dass bei einem eingesetzten Akkupack der Antriebsmotor mit der benötigten Spannung versorgt wird. Dabei ist es von Vorteil, dass die Handwerkzeugmaschine zumindest eine Elektronik aufweist, die es erlaubt, das über die Schnittstelle der Handwerkzeugmaschine angekoppelte Akkupack zu erkennen und/oder zu regeln.

In einer bevorzugten Ausführungsvariante der vorliegenden Offenbarung ist bei einem eingesetzten Akkupack ein erstes Gegenkontaktelement der Handwerkzeugmaschine mit einem dritten Gegenkontaktelement der Handwerkzeugmaschine und/oder ein zweites Gegenkontaktelement der Handwerkzeugmaschine mit einem vierten Gegenkontaktelement der Handwerkzeugmaschine verbunden, wobei der Antriebsmotor über eine Elektronik mit dem ersten und dem dritten Gegenkontaktelement und/oder mit dem zweiten und dem vierten Gegenkontaktelement verbunden ist.

In einer alternativen Ausführungsvariante der vorliegenden Offenbarung ist bei einem eingesetzten Akkupack das zweite Gegenkontaktelement der Handwerkzeugmaschine mit dem dritten Gegenkontaktelement der Handwerkzeugmaschine verbunden, wobei der Antriebsmotor über eine Elektronik mit dem ersten und dem vierten Gegenkontaktelement verbunden ist.

Unter einer Handwerkzeugmaschine sollen generell sämtliche Handwerkzeugmaschinen mit einem in Bewegung, beispielsweise in Rotation und/oder Schwingung versetzbaren Werkzeugträger, der von einem Antriebsmotor antreibbar ist, wie beispielsweise Stabschrauber, Akku-Bohrer, Schlagbohrmaschinen, Multifunktionswerkzeuge, und/ oder Bohrschrauber verstanden werden. Unter Übertragung elektrischer Energie soll in diesem Zusammenhang insbesondere verstanden werden, dass die Handwerkzeugmaschine über einen Akkupack und/oder über eine Stromkabelanbindung mit Energie versorgt wird.

Das erfindungsgemäße Akkupack ist in einem Werkzeugsystem vorgesehen. Ein Ladegerät zur Aufladung eines Ackupack ist nicht Gegenstand der vorliegenden Erfindung. Dabei weist das Ladegerät eine Schnittstelle mit Gegenkontaktelementen zur elektrischen und mechanischen Kontaktierung der Kontaktelemente des Akkupacks auf, wobei die Schnittstelle wenigstens vier elektrische Gegenkontaktelemente umfasst, die derart miteinander verschaltet angeordnet sind, dass alle Akkuzellen in den Akkuzellenstränge geladen werden, wenn das Akkupack elektrisch mit dem Ladegerät verbunden ist.

Vorteilhafterweise entspricht die Anzahl der Gegenkontaktelemente der Schnittstelle des Ladegerätes der Anzahl der Kontaktelemente der Schnittstelle des Ackupacks.

Unter einem Antriebsmotor sollen ganz allgemein alle Arten von elektrischen Verbrauchern, wie zum Beispiel ein EC-Motor, ein Linearantrieb, eine Lampe, eine Pumpe, ein Lüfter, ein Kompressor oder dergleichen verstanden werden. Der Vorteil der bürstenlosen EC-Motoren liegt unter anderem darin, dass sie zum einen nahezu wartungsfrei sind und durch ihren hohen Wirkungsgrad während eines Akkubetriebes eine längere Arbeitszeit pro Akkuladung ermöglichen, wodurch sie besonders effizient sind. Ferner können Handwerkzeugmaschinen mit EC-Motoren sehr kompakt und leicht gebaut werden, wobei es besonders vorteilhaft ist, dass auch weniger Wärmeverluste entstehen, wodurch die Geräte nicht so heiß werden wie vergleichbare Geräte, und damit langlebiger sind.

Weitere Merkmale, Anwendungsmöglichkeiten und Vorteile der Erfindung, welche in den Ansprüchen definiert ist, ergeben sich aus der nachfolgenden Beschreibung der Ausführungsbeispiele der Erfindung, welche in den Figuren dargestellt sind.

### Zeichnungen

Die Erfindung wird im Folgenden mit Bezug auf die beigefügten Figuren genauer beschrieben, wobei für gleiche Merkmale gleiche Bezugszeichen verwendet werden. Die Zeichnungen sind schematisch und zeigen:
- Fig. 1: beispielhaft eine Ansicht der erfindungsgemässen Handwerkzeugmaschine mit einem erfindungsgemäßen Akkupack;
- Fig. 2: eine perspektivische Explosionsdarstellung einer ersten Ausführungsform des Akkupacks;
- Fig. 3: eine schematische Schnittansicht einer Verbindung zwischen einem erfindungsgemäßen Akkupack und einer Schnittstelle einer ersten erfindungsgemässen Handwerkzeugmaschine; und
- Fig. 4: eine schematische Schnittansicht einer Verbindung zwischen einem erfindungsgemäßen Akkupack und einer Schnittstelle einer zweiten erfindungsgemässen Handwerkzeugmaschine.

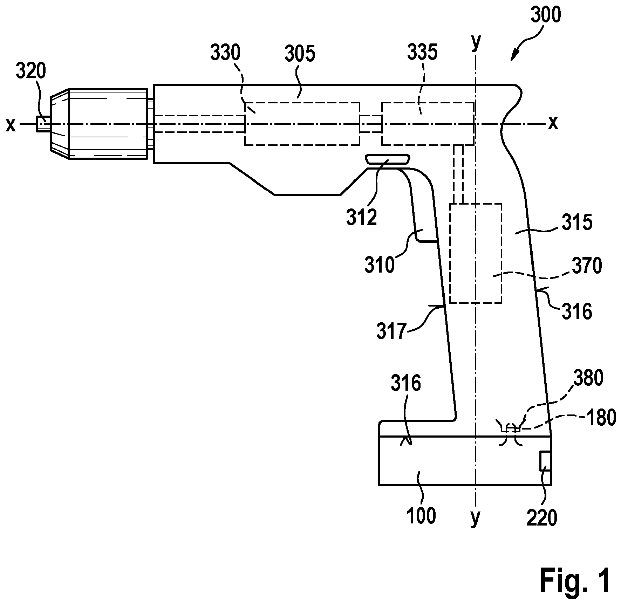

Die Figur 1 zeigt ein als Handwerkzeugmaschine 300 ausgebildetes Elektrogerät, welches beispielhaft als Akku-Bohrschrauber ausgebildet ist. Entsprechend ist die Handwerkzeugmaschine 300 in der dargestellten Ausführungsform zur netzunabhängigen Stromversorgung mechanisch und elektrisch mit einem Akkupack 100 verbunden. Es wird jedoch darauf hingewiesen, dass die vorliegende Erfindung nicht auf Akku-Bohrschrauber beschränkt ist, sondern vielmehr bei unterschiedlichen Handwerkzeugmaschinen 300 Anwendung finden kann. Die Handwerkzeugmaschine 300 weist ein in einem Gehäuse 305 angeordnetes Getriebe 330 zur Übertragung eines von einem Antriebsmotor 335 erzeugten Drehmomentes auf eine um eine Achse x rotierende Antriebswelle, an welcher eine Werkzeugaufnahme 320 für ein nicht dargestelltes Werkzeug befestigt ist, und einen Handgriff 315 auf. Innerhalb des Gehäuses 305 ist eine Elektronik 370 angeordnet, welche in elektronischem und/oder mechanischem Kontakt mit dem Antriebsmotor 335 und/oder dem Getriebe 330 steht. Der Handgriff 315 dient als Auflagefläche für eine Hand eines Bedieners der Handwerkzeugmaschine 300 und weist in der Regel eine Längsachse y, eine Vorderseite 317, die entlang einer Achse x in Richtung der Werkzeugaufnahme 320 zeigt, eine Rückseite 316, und zwei Seitenflächen 318 auf.

Im Bereich des Handgriffes 315 ist ein erstes Bedienelement 310 für die Energieversorgung des Antriebsmotors 335 angeordnet, wobei das erste Bedienelement 310 aus dem Gehäuse 305 für den Benutzer manuell zugänglich herausragt, so dass in einer an sich bekannten Art und Weise durch eine Druckbewegung des ersten Bedienelementes 310 eine Steuerung und/oder Regelung des Antriebsmotors bevorzugterweise in Abhängigkeit vom Verstellweg des ersten Bedienelementes 310 ermöglicht werden kann, und auch die Spannungsversorgung für den Antriebsmotor 335 ein- und/oder ausgeschaltet werden kann. Ferner weist die Handwerkzeugmaschine 300 ein zweites Bedienelement 312 in Form eines Schiebeschalters zum Einstellen der Drehrichtung des Antriebsmotors 335 der Handwerkzeugmaschine 300 auf. Das zweite Bedienelement 312 ist senkrecht zur Drehachse x der Antriebswelle, insbesondere der Werkzeugaufnahme 320 der Handwerkzeugmaschine 300, verschieblich angeordnet, so dass das zweite Bedienelement 312 bei Betätigung zwischen einer ersten Position, einer zweiten Position und einer dritten Position hin und her bewegt werden kann. Dabei legen jeweils die erste und zweite Position eine Drehrichtung des Antriebsmotors fest. Somit kann der Benutzer der Handwerkzeugmaschine 300 bereits anhand der Positionen des zweiten Bedienelements 312 erkennen, in welchem Arbeitsmodus die Handwerkzeugmaschine 300 arbeitet. Zusätzlich weist das zweite Schaltelement zwischen der ersten Position und der zweiten Position eine dritte Position, beispielsweise eine Mittelstellung, auf, wobei in der dritten Position eine elektrische, elektromechanische und/oder mechanische Unterbrechung des Motorstroms erfolgt. So kann zum Beispiel die Bedienung des ersten Schaltelementes 310 mechanisch gesperrt sein, wobei das zweite Bedienelement 312 bei Bewegung in eine dritte Position verriegelnd auf das erste Schaltelement 310 wirkt. Dabei kann das zweite Bedienelement 312 wie dargestellt als Schiebeschalter oder alternativ als Kippschalter ausgeführt sein.

Das erste Bedienelement 310 und das zweite Bedienelement 312 sind entlang der Drehachse x derart angeordnet, dass es möglich ist, sowohl das erste als auch das zweite Bedienelement 310, 312 mit dem Zeigefinger oder Mittelfinger zu betätigen. Dabei ist der Abstand zwischen dem ersten Bedienelement 310 und dem zweiten Bedienelement 312 so gewählt, dass eine Einhandbedienung der Handwerkzeugmaschine 300 möglich ist. Beide Bedienelemente 310, 312 sind ferner in einem Bereich unterhalb der Drehachse x angeordnet und ragen aus dem Gehäuse 305 heraus.

In der in der Figur 1 gezeigten Position ist das Akkupack 100 an dem Handgriff 315 der Handwerkzeugmaschine 300 befestigt und durch Verriegelungsmittel verriegelt. Durch die Anordnung des Akkupacks 100 unterhalb des Handgriffs 315 wird die Bedienung der Handwerkzeugmaschine 300 nicht gestört. Die nicht im Detail dargestellten Verriegelungsmittel umfassen unter anderem ein Verriegelungselement und ein Betätigungselement 220. Durch Betätigung des Betätigungsmittels 220 kann das Akkupack 100 von dem Handgriff 315 der Handwerkzeugmaschine 300 gelöst werden. Ferner weist die Handwerkzeugmaschine 300 eine Schnittstelle 380 auf.

Das in Figur 1 dargestellte Akkupack 100 ist als Schiebeakkupack ausgeführt, und weist eine zur Schnittstelle 380 der Handwerkzeugmaschine 300 korrespondierende Schnittstelle 180 auf. Alternativ zum Schiebeakkupack ist auch eine Ausführung als Dreh- oder Schwenkakkupack möglich, wobei das Akkupack 100 an der der Schwenkachse gegenüberliegenden Seite durch Verrasten, Verschrauben, Verklemmen oder Verspannen an dem Gehäuse 305 der Handwerkzeugmaschine 300 lösbar arretiert werden kann. Auf diese Weise kann wirksam einem möglichen Abfallen des Akkupacks vom Gehäuse 305 entgegengewirkt werden.

Zum lösbaren Anbringen des Akkupacks 100 an einer erfindungsgemässen Handwerkzeugmaschine 300 oder an einem Ladegerät, welches nicht Teil der vorliegenden Erfindung ist, weist das Akkupack 100 eine Schnittstelle 180 zur lösbaren mechanischen und elektrischen Verbindung mit einer korrespondierenden Schnittstelle 380 der Handwerkzeugmaschine 300 oder einer korrespondierende Schnittstelle des Ladegerätes auf. Beim Anbringen des Akkupacks 100 werden Aufnahmemittel, z. B. Führungsnuten und Führungsrippen, der Handwerkzeugmaschine 300 oder des Ladegerätes zur Aufnahme der korrespondierenden Führungselemente des Akkupacks 100 mit diesen in Eingriff gebracht, wobei das Akkupack 100 entlang der Aufnahmemittel eingeführt und die Schnittstelle 180 des Akkupacks 100 in die korrespondierende Schnittstelle 380 der Handwerkzeugmaschine 300 oder die korrespondierende Schnittstelle des Ladegerätes geschoben wird. Über die Schnittstellen 180, 380 kann das Akkupack 100 der Handwerkzeugmaschine 300 und/oder dem Ladegerät zugeordnet werden.

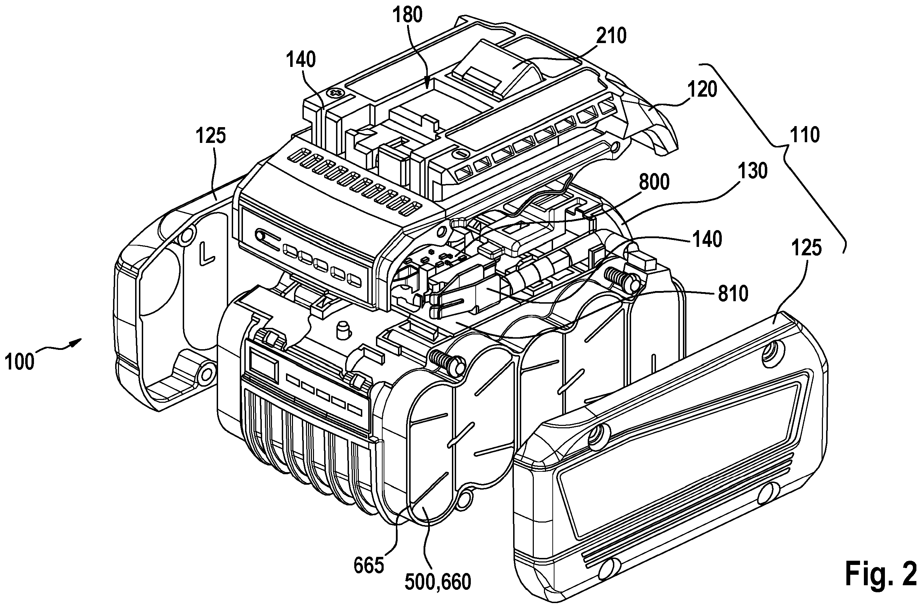

Wie in Figur 2 zu erkennen ist, umfasst die Schnittstelle 180 außerdem Kontaktelemente 140 zur elektrischen Kontaktierung des Akkupacks 100 mit der Handwerkzeugmaschine 300 oder dem Ladegerät. Die Kontaktelemente 140 sind entweder als Spannungskontaktelemente ausgebildet und dienen als Lade- und/oder Entladekontaktelemente oder als Signalkontaktelemente aufweisen, die eine Signalübertragung vom Akkupack 100 zu der Handwerkzeugmaschine 300 oder dem Ladegerät und/oder von der Handwerkzeugmaschine 300 oder dem Ladegerät zum Akkupack 100 ermöglichen.

Zum Verriegeln des Akkupacks 100 am Handgriff 315 der Handwerkzeugmaschine 300 wird das Akkupack 100 entlang des Handgriffs 315 geschoben, und zwar entlang einer unteren, im Wesentlichen senkrecht zur Längsrichtung y des Handgriffs 315 ausgerichteten Außenfläche des Handgriffs 315. In der in der Figur 1 gezeigten Position ist das Akkupack 100 durch Verriegelungsmittel am Handgriff 315 verriegelt. Die Verriegelungsmittel umfassen unter anderem ein in Figur 2 dargestelltes Verriegelungselement 210 und ein Betätigungselement 220. Durch Betätigung des Betätigungsmittels 220 kann das Akkupack 100 von dem Handgriff 315 der Handwerkzeugmaschine 300 gelöst werden. Nach Entriegelung des Akkupacks 100 kann dieses vom Handgriff 315 getrennt werden. Beim Anbringen des Akkupacks 100 an einer Handwerkzeugmaschine 300 wird das Verriegelungselement 210 in Eingriff mit einer nicht näher gezeigten korrespondierenden Aufnahme im Handgriff 315 der Handwerkzeugmaschine 300 gebracht.

Figur 2 zeigt ein Akkupack 100 in der Explosionsdarstellung. Das Akkupack 100 weist ein Gehäuse 110 aus einer ersten Gehäusekomponente 120 und einer zweiten Gehäusekomponente 130 auf. Hier ist deutlich zu erkennen, dass das Akkupackgehäuse 110 ferner einen Zellenhalter 600 mit einer Mehrzahl in einer Reihenschaltung verschalteter, nicht im Detail dargestellter Akkuzellen 400 aufweist, wobei die zweite Gehäusekomponente 130 den Zellenhalter 600 unmittelbar ausbildet. Der Zellhalter 600 ist zwischen den beiden Gehäusekomponenten 120, 130 positioniert. Das Akkupackgehäuse 110 weist ferner zwei Seitenkomponenten 125 auf, die im zusammengebauten Zustand die erste Gehäusekomponente 120 und die zweite Gehäusekomponente 130 bzw. den Zellhalter 600 derart zusammenhalten, dass ein Ablösen der ersten Gehäusekomponente 120 von der zweiten Gehäusekomponente 130, oder umgekehrt, verhindert wird. Das Ackupack 100 ist in der in Figur 2 dargestellten Ausführungsvariante als Schiebeackupack ausgebildet. Der Zellhalter 600 dient neben der Fixierung der Akkuzellen 400 in dem Akkupackgehäuse 120, 130 auch der Kühlung der Akkuzellen 400 und besteht aus einem wärmeleitfähigen Material, beispielsweise Aluminium oder einem Kunststoff.

Wie in Figur 2 erkennbar, weist der Zellenhalter 600 des Weiteren hülsenartige Isolierwandungen auf, so dass die einzelnen Akkuzellen 400 separiert werden und eine elektrische Isolierung der einzelnen Akkuzellen 400 voneinander gewährleistet werden kann. Dabei werden die einzelnen Akkuzellen 400 zur mechanischen Fixierung in dem Zellenhalter 600 beabstandet voneinander aufgenommen. In der dargestellten Ausführungsform weise jede Akkuzelle 400 eine zu einer Längsachse x parallel verlaufende Mantelfläche auf, wobei die Mantelfläche von zwei senkrecht zu der Längsachse x stehenden Stirnflächen begrenzt wird, an denen sich die elektrischen Pole der Akkuzellen 400 befinden. Der Wärmeübergangswiderstand zwischen den benachbarten Akkuzellen 400 und zwischen den Akkuzellen 400 und dem Zellenhalter 600 sollte dabei möglichst gering sein, so dass die von den Akkuzellen 400 erzeugte Verlustwärme gut nach außen abgeführt und eine Überhitzung des Akkupacks im Inneren verhindert werden kann.

Die Verbindung der Akkuzellen 400 untereinander kann wie abgebildet über Zellverbinder 500 realisiert werden. Durch die Zellverbinder 500 kann eine elektrische Verschaltung der Akkuzellen 400 untereinander in Parallel- und/oder Reihenschaltung vorgenommen werden. Obwohl in den Figuren nicht im Detail dargestellt, ist es vorteilhaft, wenn die Zellverbinder 500 derart großflächig ausgestaltet sind, dass sie, neben ihrer Funktion eine elektrische Verschaltung der Ackuzellen 400 untereinander in Parallel- und/oder Reihenschaltung zu gewährleisten, auch die Funktion eines Wärmespreizelementes 660 übernehmen und den erwünschten Wärmeübergang unterstützen können.

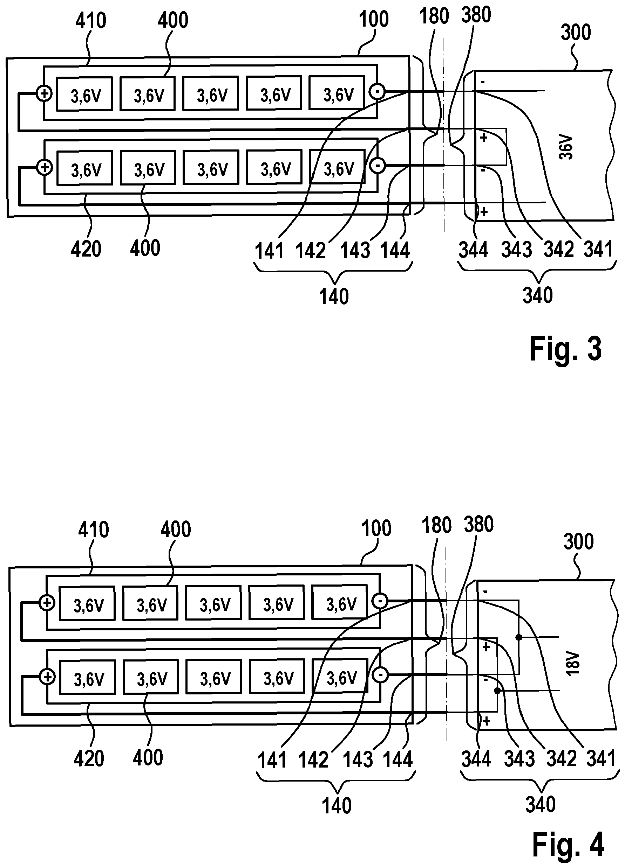

Wie in den Figuren 3 und 4 dargestellt weist das Akkupackgehäuse 110 einen ersten Akkuzellenstrang 410 und einen zweiten Akkuzellenstrang 420 auf. Beide Akkuzellenstränge 410, 420 umfassen in der dargestellten Ausführungsform jeweils fünf elektrisch leitend in Reihe geschaltete Akkuzellen 400 mit einer Nennspannung von jeweils 3,6 Volt. Grundsätzlich ist die Anzahl der in Reihe geschalteten Akkuzellen 400 variabel, wobei bevorzugterweise, wie dargestellt der erste Akkuzellenstrang 410 und der zweiten Akkuzellenstrang 420 jeweils die gleiche Anzahl Akkuzellen 400 aufnehmen. Auf diese Weise kann gewährleistet werden, dass die bereitzustellende Nennspannung ein Vielfaches der jeweiligen Spannung des ersten Akkuzellenstrange 410 und des zweiten Akkuzellenstrange 420 beträgt, so dass bei einem eingesetzten Akkupack 100 die von der Handwerkzeugmaschine 300 benötigte Betriebsspannung anliegt. Ferner weist die Schnittstelle 180 des Akkupacks 100 für jeden Akkuzellenstrang 410, 420 jeweils zwei elektrische Kontaktelemente 140 auf. Wobei dem ersten Akkuzellenstrang 410 ein erstes Kontaktelement 141 und ein zweites Kontaktelement 142 und dem zweiten Akkuzellenstrang 420 ein drittes Kontaktelement 143 und ein viertes Kontaktelement 144 zugeordnet sind. Der erste Akkuzellenstrang 410 und der zweite Akkuzellenstrang 420 sind innerhalb des Akkupackgehäuses 110 elektrisch voneinander isoliert angeordnet. Ferner sind der erste Akkuzellenstrang 410 und der zweiten Akkuzellenstrang 420 bei einem eingesetzten Ackupack 100 derart in Parallel- oder in einer Reihenschaltung elektrisch leitend miteinander verbunden, dass die von der Handwerkzeugmaschine 300 benötigte Spannung anliegt. Entsprechend weist die Schnittstelle 380 der Handwerkzeugmaschine 300, wie in den Figuren 3 und 4 jeweils vier, grundsätzlich eine der Anzahl der Kontaktelemente 140 des Akkupacks 100 korrespondierende Anzahl Gegenkontaktelementen 340 zur elektrischen und mechanischen Kontaktierung der Kontaktelemente 140 des Akkupacks 100 auf. Die Gegenkontaktelemente 340 sind derart miteinander verschaltet angeordnet, dass bei einem eingesetzten erfindungsgemäßen Akkupack 100 der Antriebsmotor 335 mit der benötigten Spannung versorgt wird. Die von der Handwerkzeugmaschine 300 benötigte Spannung entspricht dabei ein Vielfaches der durch die Ackuzellenstränge 410, 420 bereitgestellten.

In der in Figur 3 dargestellten Ausführungsvariante sind die Akkuzellen 400 des ersten Akkuzellenstrangs 410 und des zweiten Akkuzellenstrangs 420 untereinander in Reihe geschaltet. Die elektrischen Gegenkontaktelemente 340 der Handwerkzeugmaschine 300 sind derart miteinander verbunden, dass in der Handwerkzeugmaschine 300 der zweite Gegenkontaktelement 342 mit dem dritten Gegenkontaktelement 343 verbunden ist, wodurch die beiden Akkustränge 420, 410 in Reihe geschalten werden und dadurch zwischen dem ersten Gegenkontaktelement 341 und dem vierten Gegenkontaktelement 344 eine Gesamtspannung anliegt die sich aus der Summe der beiden Strangspannungen ergibt.

Der Antriebsmotor 335 ist über eine Elektronik 370 mit dem ersten und dem vierten Gegenkontaktelement 341, 344 verbunden.

In der in Figur 4 dargestellten Ausführungsvariante sind die Akkuzellen 400 des ersten Akkuzellenstrangs 410 und des zweiten Akkuzellenstrangs 420 parallel geschaltet. Die die elektrischen Gegenkontaktelemente 340 der Handwerkzeugmaschine 300 sind derart miteinander verbunden, dass bei einem eingesetzten Akkupack 100 das erste Gegenkontaktelement 341 mit dem dritten Gegenkontaktelement 343 und das zweite Gegenkontaktelement 342 mit dem vierten Gegenkontaktelement 344 verbunden ist. Die Nennbetriebsspannung der Handwerkzeugmaschine 300 wird dann zwischen dem verbundenen ersten und dritten Gegenkontaktelementen 341, 343 und dem verbundenen zweiten und vierten Gegenkontaktelement 342, 344 342, 344 abgegriffen.

Grundsätzlich von Vorteil ist, wenn der Zellenhalter 600, wie in der Figur 2 dargestellt, bereichsweise eine Außenseite des Akkupackgehäuses 110, insbesondere die zweite Gehäusekomponente 130 ausbildet. Ferner ist es von Vorteil, wenn die Seitenkomponenten 125 aus dem gleichen Material bestehen wie das restliche Akkupackgehäuse 110, vorzugsweise aus einem synthetisch, technisch verwendbaren thermoplastischen Kunststoff wie beispielsweise einem Polyamid, besteht. Nicht dargestellt, aber grundsätzlich denkbar ist eine Ausführungsvariante des Akkupacks 100 mit einem Zellenhalter 600 der den wenigstens einen ersten Akkuzellenstrang 410 und/oder den wenigsten einen zweiten Akkuzellenstrang 420 unmittelbar ausbildet. Auf diese Weise können Kosten reduziert und der Montageaufwand gering gehalten werden. Alternativ können die Seitenkomponenten 125 zumindest teilweise aus einem Metall, vorzugsweise aus einem Aluminium- oder Magnesiumdruckguss bestehen, wobei in diesem Fall eine ausreichende bzw. zuverlässige Isolationseinlage, beispielsweise ein elastisches wärmeleitendes Element 650 zwischen den Zellverbindern 500 und den Seitenkomponenten 125 verwendet werden muss.

Obwohl die Erfindung durch die bevorzugten Ausführungsbeispiele im Detail näher erläutert wurde, können vom Fachmann auch andere Kombinationen der genannten Merkmale vorgesehen sein, ohne den in den Ansprüchen definierten Schutzumfang der Erfindung zu verlassen.

## Patentansprüche

1. Handwerkzeugmaschine (300) umfassend ein Gehäuse (305), einen in dem Gehäuse (305) angeordneten Antriebsmotor (335) zum Antrieb einer mechanischen Schnittstelle (320), eine in dem Gehäuse (305) angeordnete erste Elektronik (370), ein lösbar mit der Handwerkzeugmaschine (300) verbindbares Akkupack (100), aufweisend ein Akkupackgehäuse (110), wobei das Akkupackgehäuse (110) mindestens zwei Akkuzellen (400) aufnimmt; und eine Schnittstelle (180) zum Herstellen einer mechanischen und elektrischen Verbindung des Akkupacks (100) mit einer Handwerkzeugmaschine (300) und einem Ladegerät; wobei die Schnittstelle (180) Kontaktelemente (140) zur elektrischen und/oder mechanischen Kontaktierung korrespondierender Gegenkontaktelemente (340) an der Handwerkzeugmaschine (300) und/oder korrespondierender Gegenkontaktelemente an dem Ladegerät aufweist; wobei das Akkupackgehäuse (110) wenigstens einen ersten Akkuzellenstrang (410) zur Aufnahme wenigstens einer ersten Akkuzelle (400) und wenigstens einen zweiten Akkuzellenstrang (420) zur Aufnahme wenigstens einer zweiten Akkuzelle (400) umfasst; wobei der wenigstens erste Akkuzellenstrang (410) und der wenigstens zweiten Akkuzellenstrang (420) innerhalb des Akkupackgehäuses (110) elektrisch voneinander isoliert angeordnet sind, wobei das Akkupackgehäuse (110) für jeden Akkuzellenstrang (410, 420) wenigstens zwei elektrische Kontaktelemente (140) aufweist, wobei die Handwerkzeugmaschine (300) eine Schnittstelle (380) mit Gegenkontaktelementen (340) zur elektrischen und mechanischen Kontaktierung der Kontaktelemente (140) des Akkupacks (100) aufweist, **dadurch gekennzeichnet, dass** die Schnittstelle (380) wenigstens vier elektrische Gegenkontaktelemente (340) aufweist; wobei die Gegenkontaktelemente (340) derart miteinander verschaltet angeordnet sind, dass bei einem eingesetzten Akkupack (100) der Antriebsmotor (335) mit der benötigten Spannung versorgt wird..

2. Handwerkzeugmaschine (300) nach Anspruch 1 , **dadurch gekennzeichnet, dass** jeweils der wenigstens erste Akkuzellenstrang (410) und der wenigstens zweiten Akkuzellenstrang (420) mehrere in Reihenschaltung elektrisch leitend miteinander verbundene Akkuzellen (400), vorzugsweise fünf Akkuzellen (400), besonders bevorzugt zehn Akkuzellen (400) aufnimmt.

3. Handwerkzeugmaschine (300) nach einem der Ansprüche 1 bis 2, **dadurch gekennzeichnet, dass** der wenigstens erste Akkuzellenstrang (410) und der wenigstens zweiten Akkuzellenstrang (420) jeweils die gleiche Anzahl Akkuzellen (400) aufnimmt.

4. Handwerkzeugmaschine (300) nach einem der Ansprüche 1 bis 3, **dadurch gekennzeichnet, dass** der wenigstens erste Akkuzellenstrang (410) und der wenigstens zweiten Akkuzellenstrang (420) bei einem eingesetzten Akkupack (100) derart in Parallel- oder in einer Reihenschaltung elektrisch leitend miteinander verbunden sind, dass die von der Handwerkzeugmaschine (300) benötigte Betriebsspannung anliegt.

5. Handwerkzeugmaschine (300) nach einem der Ansprüche 1 bis 4, **dadurch gekennzeichnet, dass** die Anzahl der Kontaktelemente (140) der Schnittstelle (180) des Akkupacks (100) zumindest der Anzahl der Gegenkontaktelemente (340) der Schnittstelle (380) der Handwerkzeugmaschine (300) entspricht.

6. Handwerkzeugmaschine (300) nach einem der Ansprüche 1 bis 5, **dadurch gekennzeichnet, dass** das Akkupackgehäuse (110) wenigstens einen Zellenhalter (600) zur Aufnahme des wenigstens einen ersten Akkuzellenstrangs (410) und/oder des wenigstens einen zweiten Akkuzellenstranges (420) umfasst.

7. Handwerkzeugmaschine (300) nach einem der vorhergehenden Ansprüche, **dadurch gekennzeichnet, dass** die Anzahl der Kontaktelemente (140) der Schnittstelle (180) des Akkupacks (100) zumindest der Anzahl der Gegenkontaktelemente (340) der Schnittstelle (380) der Handwerkzeugmaschine (300) entspricht.

8. Handwerkzeugmaschine (300) nach einem der vorhergehenden Ansprüche, **dadurch gekennzeichnet, dass** die Betriebsspannung der Handwerkzeugmaschine (300) ein Vielfaches der durch wenigstens einen Akkuzellenstrang (410, 420) bereitgestellten Spannung ist; und wobei die elektrischen Gegenkontaktelemente (340) derart miteinander verbunden sind, dass bei einem eingesetzten Akkupack (100) der Antriebsmotor (335) mit der benötigten Spannung versorgt wird.

9. Handwerkzeugmaschine (300) nach einem der vorhergehenden Ansprüche, **dadurch gekennzeichnet, dass** bei einem eingesetzten Akkupack (100) ein erstes Gegenkontaktelement (341) der Handwerkzeugmaschine (300) mit einem dritten Gegenkontaktelement (343) der Handwerkzeugmaschine (300) und/oder ein zweites Gegenkontaktelement (342) der Handwerkzeugmaschine (300) mit einem vierten Gegenkontaktelement (344) der Handwerkzeugmaschine (300) verbunden ist, wobei der Antriebsmotor (335) über eine Elektronik (370) mit dem ersten und dem dritten Gegenkontaktelement (341, 343) und/oder mit dem zweiten und dem vierten Gegenkontaktelement (342, 344) verbunden ist.

10. Handwerkzeugmaschine (300) nach einem der vorhergehenden Ansprüche, **dadurch gekennzeichnet, dass** bei einem eingesetzten Akkupack (100) ein zweites Gegenkontaktelement (342) der Handwerkzeugmaschine (300) mit einem dritten Gegenkontaktelement (343) der Handwerkzeugmaschine (300) verbunden ist, wobei der Antriebsmotor (335) mit dem ersten und dem vierten Gegenkontaktelement (342, 344) verbunden ist.

## Claims

1. Portable power tool (300) comprising a housing (305), a drive motor (335), arranged in the housing (305), for driving a mechanical interface (320), a first electronic system (370) arranged in the housing (305), a battery pack (100) that is releasably connectable to the portable power tool (300) and has a battery pack housing (110), wherein the battery pack housing (110) holds at least two battery cells (400); and an interface (180) for establishing a mechanical and electrical connection of the battery pack (100) to a portable power tool (300) and a charger; wherein the interface (180) has contact elements (140) for making electrical and/or mechanical contact with corresponding mating contact elements (340) on the portable power tool (300) and/or corresponding mating contact elements on the charger; wherein the battery pack housing (110) comprises at least one first battery cell string (410) for holding at least one first battery cell (400) and at least one second battery cell string (420) for holding at least one second battery cell (400); wherein the at least first battery cell string (410) and the at least second battery cell string (420) are arranged in a manner electrically insulated from one another within the battery pack housing (110), wherein the battery pack housing (110) has at least two electrical contact elements (140) for each battery cell string (410, 420), wherein the portable power tool (300) has an interface (380) with mating contact elements (340) for making electrical and mechanical contact with the contact elements (140) of the battery pack (100), **characterized in that** the interface (380) has at least four electrical mating contact elements (340); wherein the mating contact elements (340) are arranged in an interconnected manner such that, with a battery pack (100) inserted, the drive motor (335) is supplied with the required voltage.

2. Portable power tool (300) according to Claim 1, **characterized in that** each of the at least first battery cell string (410) and the at least second battery cell string (420) holds a plurality of battery cells (400) that are connected together in series in an electrically conducting manner, preferably five battery cells (400), particularly preferably ten battery cells (400).

3. Portable power tool (300) according to either of Claims 1 and 2, **characterized in that** the at least first battery cell string (410) and the at least second battery cell string (420) each hold the same number of battery cells (400).

4. Portable power tool (300) according to one of Claims 1 to 3, **characterized in that** the at least first battery cell string (410) and the at least second battery cell string (420), with a battery pack (100) inserted, are connected together in parallel or in series in an electrically conducting manner such that the operating voltage required by the portable power tool (300) is applied.

5. Portable power tool (300) according to one of Claims 1 to 4, **characterized in that** the number of contact elements (140) of the interface (180) of the battery pack (100) corresponds at least to the number of mating contact elements (340) of the interface (380) of the portable power tool (300).

6. Portable power tool (300) according to one of Claims 1 to 5, **characterized in that** the battery pack housing (110) comprises at least one cell holder (600) for holding the at least one first battery cell string (410) and/or the at least one second battery cell string (420).

7. Portable power tool (300) according to one of the preceding claims, **characterized in that** the number of contact elements (140) of the interface (180) of the battery pack (100) corresponds at least to the number of mating contact elements (340) of the interface (380) of the portable power tool (300).

8. Portable power tool (300) according to one of the preceding claims, **characterized in that** the operating voltage of the portable power tool (300) is a multiple of the voltage provided by at least one battery cell string (410, 420); and wherein the electrical mating contact elements (340) are connected together such that, with a battery pack (100) inserted, the drive motor (335) is supplied with the required voltage.

9. Portable power tool (300) according to one of the preceding claims, **characterized in that**, with a battery pack (100) inserted, a first mating contact element (341) of the portable power tool (300) is connected to a third mating contact element (343) of the portable power tool (300) and/or a second mating contact element (342) of the portable power tool (300) is connected to a fourth mating contact element (344) of the portable power tool (300), wherein the drive motor (335) is connected to the first and the third mating contact element (341, 343) and/or to the second and the fourth mating contact element (342, 344) via an electronic system (370).

10. Portable power tool (300) according to one of the preceding claims, **characterized in that**, with a battery pack (100) inserted, a second mating contact element (342) of the portable power tool (300) is connected to a third mating contact element (343) of the portable power tool (300), wherein the drive motor (335) is connected to the first and the fourth mating contact element (342, 344) .

## Revendications

1. Machine-outil à main (300) comprenant un boîtier (305), un moteur d'entraînement (335) disposé dans le boîtier (305) et destiné à entraîner une interface mécanique (320), une première électronique (370) disposée dans le boîtier (305), un bloc-batterie détachable (100) qui peut être relié à la machine-outil à main (300) et qui comporte un boîtier de bloc-batterie (110), le boîtier de bloc-batterie (110) recevant au moins deux éléments de batterie (400) ; et une interface (180) destinée à établir une liaison mécanique et électrique entre le bloc-batterie (100) et une machine-outil à main (300) et un chargeur ; l'interface (180) comportant des éléments de contact (140) destinés à la mise en contact électrique et/ou mécanique d'éléments de contact homologues (340) au niveau de la machine-outil à main (300) et/ou des éléments de contact homologies du chargeur ; le boîtier de bloc-batterie (110) comprenant au moins une première ligne d'éléments de batterie (410) destinée à recevoir au moins un premier élément de batterie (400) et au moins une deuxième ligne d'éléments de batterie (420) destinée à recevoir au moins un deuxième élément de batterie (400) ; l'au moins une première ligne d'éléments de batterie (410) et l'au moins une deuxième ligne d'éléments de batterie (420) étant disposées à l'intérieur du boîtier de bloc-batterie (110) en étant isolées électriquement l'une de l'autre, le boîtier de bloc-batterie (110) comportant au moins deux éléments de contact électrique (140) pour chaque ligne d'éléments de batterie (410, 420), la machine-outil à main (300) comportant une interface (380) avec des éléments de contact homologues (340) destinés au contact électrique et mécanique des éléments de contact (140) de la batterie (100), **caractérisé en ce que** l'interface (380) comporte au moins quatre éléments de contact électrique homologues (340) ; les éléments de contact homologues (340) étant interconnectés les uns avec les autres de telle sorte que le moteur d'entraînement (335) soit alimenté avec la tension requise lorsqu'un bloc-batterie (100) est inséré.

2. Machine-outil à main (300) selon la revendication 1, **caractérisée en ce que** l'au moins une première ligne d'éléments de batterie (410) et l'au moins une deuxième ligne d'éléments de batterie (420) comportent plusieurs éléments de batterie (400), de préférence cinq éléments de batterie (400), de manière particulièrement préférée dix éléments de batterie (400), montés électriquement en série.

3. Machine-outil à main (300) selon l'une des revendications 1 et 2, **caractérisée en ce que** l'au moins une première ligne d'éléments de batterie (410) et l'au moins une deuxième ligne d'éléments de batterie (420) reçoivent chacune le même nombre d'éléments de batterie (400).

4. Machine-outil à main (300) selon l'une des revendications 1 à 3, **caractérisée en ce que** l'au moins une première ligne d'éléments de batterie (410) et l'au moins une deuxième ligne d'éléments de batterie (420) sont montées électriquement en parallèle ou en série lorsqu'un bloc-batterie (100) est inséré, la tension de fonctionnement requise par la machine-outil à main (300) étant appliquée.

5. Machine-outil à main (300) selon l'une des revendications 1 à 4, **caractérisée en ce que** le nombre d'éléments de contact (140) de l'interface (180) du bloc-batterie (100) correspond au moins au nombre d'éléments de contact homologues (340) de l'interface (380) de la machine-outil à main (300).

6. Machine-outil à main (300) selon l'une des revendications 1 à 5, **caractérisée en ce que** le boîtier du bloc-batterie (110) comprend au moins un porte-éléments (600) destiné à recevoir l'au moins une première ligne d'éléments de batterie (410) et/ou l'au moins une deuxième ligne d'éléments de batterie (420).

7. Machine-outil à main (300) selon l'une des revendications précédentes, **caractérisée en ce que** le nombre d'éléments de contact (140) de l'interface (180) du bloc-batterie (100) correspond au moins au nombre d'éléments de contact homologues (340) de l'interface (380) de la machine-outil à main (300).

8. Machine-outil à main (300) selon l'une des revendications précédentes, **caractérisée en ce que** la tension de fonctionnement de la machine-outil à main (300) est un multiple de la tension fournie par au moins une ligne d'éléments de batterie (410, 420) ; et les éléments de contact homologues électriques (340) étant reliés les uns aux autres de manière que le moteur d'entraînement (335) soit alimenté avec la tension requise lorsqu'un bloc-batterie (100) est inséré.

9. Machine-outil à main (300) selon l'une des revendications précédentes, **caractérisée en ce que**, lorsqu'un bloc-batterie (100) est utilisé, un premier élément de contact homologue (341) de la machine-outil à main (300) est relié à un troisième élément de contact homologue (343) de la machine-outil à main (300) et/ou un deuxième élément de contact homologue (342) de la machine-outil à main (300) est relié à un quatrième élément de contact homologue (344) de la machine-outil à main (300), le moteur d'entraînement (335) étant relié aux premier et troisième éléments de contact homologues (341, 343) et/ou aux deuxième et quatrième éléments de contact homologues (342, 344) par le biais d'une électronique (370).

10. Machine-outil à main (300) selon l'une des revendications précédentes, **caractérisée en ce que**, lorsqu'un bloc-batterie (100) est inséré, un deuxième élément de contact homologue (342) de la machine-outil à main (300) est relié à un troisième élément de contact homologue (343) de la machine-outil à main (300), le moteur d'entraînement (335) étant relié aux premier et quatrième éléments de contact homologues (342, 344).
